# EUROPEAN PATENT APPLICATION

(11) **EP 4 498 197 A1**
(43) Date of publication of application: **29.01.2025**
(21) Application number: 24154717.3
(22) Date of filing: 30.01.2024
(51) Int. Cl.: G05B 23/02

(54) **SMART APPLIANCE CONTROL METHOD AND APPARATUS, AND STORAGE MEDIUM**

(30) Priority: 24.07.2023 CN 202310912652
(71) Applicant: Beijing Xiaomi Mobile Software Co., Ltd., Beijing 100085 (CN)
(72) Inventor: HONG, Jing, Beijing, 100085 (CN); DOU, Benhe, Beijing, 100085 (CN)
(74) Representative: dompatent von Kreisler Selting Werner - Partnerschaft von Patent- und Rechtsanwälten mbB

(57) **Abstract**

The disclosure relates to a smart appliance control method and apparatus, and a storage medium. The smart appliance control method includes: acquiring (S11) a signal output by at least one sound sensor in a smart appliance, and determining (S12) a component emitting a sound and the volume of the sound according to the signal output by the sound sensor; and prompting (S13) a working state of the component based on the volume of the sound.

## Description

### TECHNICAL FIELD

The disclosure relates to the technical field of smart appliances, in particular to a smart appliance control method and apparatus, and a storage medium.

### BACKGROUND

With the improvement of the living standards of people, smart appliances such as refrigerators have become an indispensable part of people's daily life.

During daily working, a smart appliance will often emit some sounds. When a user hears the sound emitted by the smart appliance, the user will think that the smart appliance is in an abnormal working state.

### SUMMARY

The disclosure provides a smart appliance control method and apparatus, and a storage medium.

According to a first aspect of examples of the disclosure, there is provided a smart appliance control method, including:

acquiring a signal output by at least one sound sensor in a smart appliance, and determining a component emitting a sound and a volume of the sound according to the signal output by the sound sensor; and prompting (also referred to as determining, identifying or recognizing) a working state of the component based on the volume of the sound.

In one embodiment, prompting the working state of the component based on the volume of the sound includes:

prompting the working state of the component in response to determining that the volume of the sound is greater than a first volume threshold.

In one embodiment, prompting the working state of the component includes: determining the working state of the component; and displaying first information if the working state of the component is a normal working state, where the first information includes identification information of the component and is used to represent that the component is in a normal working state.

In one embodiment, prompting the working state of the component includes: determining the working state of the component; and displaying second information in response to determining that the working state of the component is an abnormal working state, where the second information includes identification information of the component and is used to represent that the component is in an abnormal working state.

In one embodiment, prompting the working state of the component includes at least one of: displaying information on a display screen of the smart appliance; and sending the information to a target device associated with the smart appliance, where the information includes first information and/or second information; the first information includes identification information of the component and is used to represent that the component is in a normal working state; the second information includes identification information of the component and is used to represent that the component is in an abnormal working state.

According to a second aspect of the examples of the disclosure, there is provided a smart appliance control apparatus, including:
a detection unit, configured to acquire a signal output by at least one sound sensor in a smart appliance, and determine the volume of a sound and a component emitting the sound according to the signal output by the sound sensor; and
a prompting unit, configured to prompt (also referred to as determine, identify or recognize) a working state of the component based on the volume of the sound.

In one embodiment, the prompting unit prompts the working state of the component based on the volume of the sound in the following way: prompting the working state of the component in response to determining that the volume of the sound is greater than a first volume threshold.

In one embodiment, the prompting unit prompts the working state of the component in the following way: determining the working state of the component, and displaying first information if the working state of the component is a normal working state, where the first information includes identification information of the component and is used to represent that the component is in a normal working state.

In one embodiment, the prompting unit prompts the working state of the component in the following way: determining the working state of the component; and displaying second information if the working state of the component is an abnormal working state, where the second information includes identification information of the component and is used to represent that the component is in an abnormal working state.

In one embodiment, the prompting unit prompts the working state of the component in at least one of the following ways:
displaying information for prompting the working state of the component on a display screen of the smart appliance;
sending the information to a target device associated with the smart appliance, where the information includes first information and/or second information; the first information includes identification information of the component and is used to represent that the component is in a normal working state; the second information includes identification information of the component and is used to represent that the component is in an abnormal working state.

According to a third aspect of the examples of the disclosure, there is provided a smart appliance control apparatus, including:
a processor; and a memory, configured to store instructions executable by a processor; where
the processor is configured to acquire a signal output by at least one sound sensor in a smart appliance; determine a component emitting a sound and a volume of the sound according to the signal output by the sound sensor; and prompt (also referred to as determine, identify or recognize) a working state of the component based on the volume of the sound.

In one embodiment, the processor prompts the working state of the component based on the volume of the sound in the following way: prompting the working state of the component in response to determining that the volume of the sound is greater than a first volume threshold.

In one embodiment, the processor prompts the working state of the component in the following way: determining the working state of the component; and displaying first information in response to determining that the working state of the component is a normal working state, where the first information comprises identification information of the component and is used to represent that the component is in a normal working state.

In one embodiment, the processor prompts the working state of the component in the following way: determining the working state of the component; and displaying second information in response to determining that the working state of the component is an abnormal working state, where the second information comprises identification information of the component and is used to represent that the component is in an abnormal working state.

In one embodiment, the processor prompts the working state of the component in the following way: displaying information on a display screen of the smart appliance; where the information comprises first information and/or second information; the first information comprises identification information of the component and is used to represent that the component is in a normal working state; the second information comprises identification information of the component and is used to represent that the component is in an abnormal working state.

In one embodiment, the processor prompts the working state of the component in the following way: sending information to a target device associated with the smart appliance; where the information comprises first information and/or second information; the first information comprises identification information of the component and is used to represent that the component is in a normal working state; the second information comprises identification information of the component and is used to represent that the component is in an abnormal working state.

In one embodiment, the processor prompts the working state of the component in the following ways: displaying information on a display screen of the smart appliance; and sending the information to a target device associated with the smart appliance; where the information comprises first information and/or second information; the first information comprises identification information of the component and is used to represent that the component is in a normal working state; the second information comprises identification information of the component and is used to represent that the component is in an abnormal working state.

According to a fourth aspect of the examples of the disclosure, there is provided a non-transitory computer-readable storage medium, where the storage medium stores instructions, and when the instructions in the storage medium are executed by a processor of a smart appliance, the smart appliance is enabled to perform the smart appliance control method as described in the first aspect or any one of the embodiments in the first aspect.

The technical solutions provided by the examples of the disclosure may include the following beneficial effects: the working state of the component is prompted based on the volume of sounds emitted by the component in the smart appliance, so that the user can intuitively and clearly understand the working state of the component, thus improving the user experience.

It needs to be understood that both the foregoing general description and the following detailed description are illustrative and explanatory merely and are not restrictive of the disclosure.

### BRIEF DESCRIPTION OF THE DRAWINGS

The accompanying drawings, which are incorporated in and constitute a part of this description, illustrate examples consistent with the disclosure and together with the description, serve to explain the principles of the disclosure.
FIG. 1 is a flowchart of a smart appliance control method according to an example.
FIG. 2 is a flowchart of a method for prompting a working state of a component according to an example.
FIG. 3 is a flowchart of a method for prompting a normal working state of a component according to an example.
FIG. 4 is a flowchart of a method for prompting an abnormal working state of a component according to an example.
FIG. 5 is a flowchart of a smart appliance control method according to an example.
FIG. 6 is a structural schematic diagram of a smart refrigerator according to an example.
FIG. 7 is a flowchart of a smart refrigerator control method according to an example.
FIG. 8 is a block diagram of a smart appliance control apparatus according to an example.
FIG. 9 is a block diagram of a smart appliance control apparatus according to an example.

### DETAILED DESCRIPTION

Examples will be described in detail here and shown in the accompanying drawings illustratively. When the following descriptions involve the accompanying drawings, unless otherwise indicated, the same numbers in different accompanying drawings denotes the same or similar elements. The embodiments described in the following examples do not represent all embodiments consistent with the disclosure.

A smart appliance control method provided by the examples of the disclosure may be applied to control over smart appliances. For example, the smart appliance control method may be applied to the control over a smart refrigerator when the smart refrigerator works.

Components that support the working of smart appliances are installed in the smart appliances. The components may be, for example, compressors, fans, dampers and defrost heaters in smart refrigerators. The component in the smart appliance will emit a sound during working. Moreover, sometimes the sound emitted by the component may be relatively loud, which may cause the user to mistakenly think that the sound is a sound emitted by the abnormal working of the component (abnormal sound), resulting in needless panic and complaints.

In view of this, the disclosure provides a smart appliance control method, which can prompt the working state of the component based on the volume of the sound emitted by the component in the smart appliance, so that the user can intuitively and clearly understand the working state of the component, improving the user experience, avoiding causing some needless panic and complaints, and also facilitating the use and maintenance of appliances such as refrigerators.

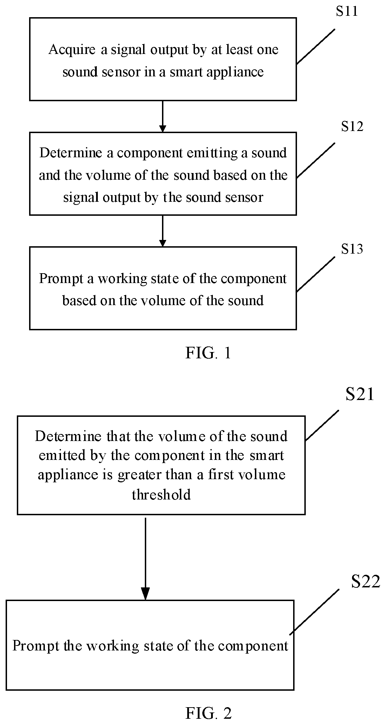

FIG. 1 is a flowchart of a smart appliance control method according to an example, and as shown in FIG. 1, the smart appliance control method includes the following steps.

In step S 11, a signal output by at least one sound sensor in a smart appliance is acquired.

In the example of the disclosure, a sound sensor is installed in the smart appliance, and the sound sensor can detect a sound emitted by a component in the smart appliance and determine the volume of the sound.

One or more sound sensors are installed in the smart appliance. An installation position of the sound sensor in the smart appliance may be determined based on an installation position of a component capable of emitting a sound in the smart appliance. For example, the sound sensor may be installed in the vicinity of a component that emits a sound.

In an example of the disclosure, the component emitting the sound may be determined based on the sound detected by the sound sensor.

In step S 12, the component emitting the sound and the volume of the sound are determined according to the signal output by the sound sensor.

In step S13, the working state of the component is prompted based on the volume of the sound.

In the example of the disclosure, the smart appliance prompts (also referred to as determines, identifies or recognizes) the corresponding working state of the component based on the volume of the sound detected by the sound sensor.

In the example of the disclosure, the working state of the component includes a normal working state and an abnormal working state. The component being in a normal working state may be understood as the working performance of the component satisfying the normal execution of the function implemented by the smart appliance based on the component. The component being in an abnormal state may be understood as the working performance of the component being unable to satisfy the normal execution of the function implemented by the smart appliance based on the component.

The working state of the component involved in the example of the disclosure is independent of the volume size of the sound.

The smart appliance control method provided by the example of the disclosure can prompt the working state of the component based on the volume of the sound emitted by the component, so that the user can intuitively and clearly understand the working state of the component in the smart appliance.

In the example of the disclosure, when the component is in different working states, sounds with different volumes are correspondingly emitted.

In an embodiment of the examples of the disclosure, when it is determined that the volume of the detected sound emitted by the component is large, the working state of the component is prompted, so as to avoid the situation that the user does not know the real working state of the component after hearing the loud sound.

FIG. 2 is a flowchart of a method for prompting a working state of a component according to an example, and as shown in FIG. 2, the method includes the following steps.

In step S21, it is determined that the volume of the sound emitted by the component in the smart appliance is greater than a first volume threshold.

In the example of the disclosure, the first volume threshold is a volume value determined according to an experimental value of a related experiment. When the volume of the sound emitted by the component is greater than the first volume threshold, a user may think that the component is in an abnormal working state. Thus, in the example of the disclosure, in the case that it is determined that the volume of the sound emitted by the component in the smart appliance is greater than the first volume threshold, the working state of the component is prompted, so as to enable the user to clearly know the actual working state of the component in the smart appliance.

In step S22, the working state of the component is prompted.

In the example of the disclosure, prompting the working state of the component includes prompting a normal working state or abnormal working state of the component.

According to the smart appliance control method provided by the example of the disclosure, in the case that it is detected that the volume of the sound emitted by the component is greater than the first volume threshold, the working state of the component is prompted, thus enabling the user to clearly know the actual working state of the component inside the smart appliance, so as to avoid that when the smart appliance normally works to emit a sound with a larger volume, the user mistakenly thinks that the component in the smart appliance is malfunctioning.

In the example of the disclosure, the volume range of the sound emitted by the component in the normal working state and the volume range of the sound emitted by the component in the abnormal working state may be set. Thus, when the sound emitted by the component is detected, it is determined whether the volume range of the detected sound belongs to the volume range of the sound emitted by the component in the normal working state or the volume range of the sound emitted by the component in the abnormal working state, and the prompt information conforming to the actual working state is clearly sent out.

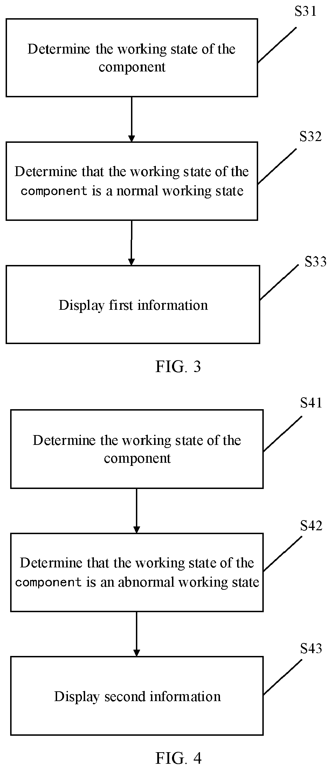

FIG. 3 is a flowchart of a method for prompting a normal working state of a component according to an example, and as shown in FIG. 3, the method includes the following steps.

In step S31, the working state of the component is determined. In step S32, it is determined that the working state of the component is a normal working state.

In the example of the disclosure, in the case that the working state of the component is the normal working state, since the generated sound is loud (greater than the first volume threshold), information for prompting that the component is in the normal working state can be sent out, which is referred to as first information.

In step S33, displaying the first information is displayed. The first information includes identification information of the component and is used to represent that the component is in a normal working state.

In the example of the disclosure, the first information includes identification information of the component, so that the component currently emitting a sound can be clearly identified. In addition, the first information includes prompt information that the working state of the component is the normal working state, so that the user can clearly know that the smart appliance is in the normal working state at this time.

FIG. 4 is a flowchart of a method for prompting an abnormal working state of a component according to an example, and as shown in FIG. 4, the method includes the following steps.

In step S41, the working state of the component is determined.

In the example of the disclosure, in the case that the first volume threshold belongs to the volume range of the sound generated when the component is in the abnormal working state, since the generated sound is loud (greater than the first volume threshold), and the component is in the abnormal working state, information for prompting that the component is in the abnormal working state can be sent out, which is referred to as second information.

In step S42, it is determined that the working state of the component is an abnormal working state.

In step S43, displaying the second information. The second information includes identification information of the component and is used to represent that the component is in an abnormal working state.

In the example of the disclosure, the second information includes identification information of the component, so that the component currently emitting a sound can be clearly identified.

In the example of the disclosure, the second information includes a prompt information that the component is in an abnormal working state, so that the user can clearly know that the smart appliance is in the abnormal working state at this time.

In the example of the disclosure, information may be displayed on a display screen of the smart appliance, and/or information may be sent to a target device associated with the smart appliance to prompt a working state of the component in the smart appliance. The information displayed on the display screen or the information sent to the target device includes first information and/or second information. The first information includes identification information of the component and is used to represent that the component is in a normal working state; the second information includes identification information of the component and is used to represent that the component is in an abnormal working state.

In the example of the disclosure, when the working state of the component is prompted, prompts can be provided on the smart appliance. For example, when the main control board of the smart appliance controls the components to work, the main control board of the smart appliance transmits the information prompting the working state of the component to the display screen based on the detected volume of the sound by the sound sensor, and the identification information and working state of the working component are displayed on the display screen.

In the example of the disclosure, when the working state of the component is prompted, information may be sent to the terminal associated with the smart appliance. For example, when the main control board of the smart appliance controls the components to work, information may be sent to a target device associated with the smart appliance, and the information may be used to prompt the working states of the components. In one example, the information is sent to the cloud, and then sent to the terminal by the cloud, and the identification information and working state of the working component are displayed on the application of the terminal to remind the user.

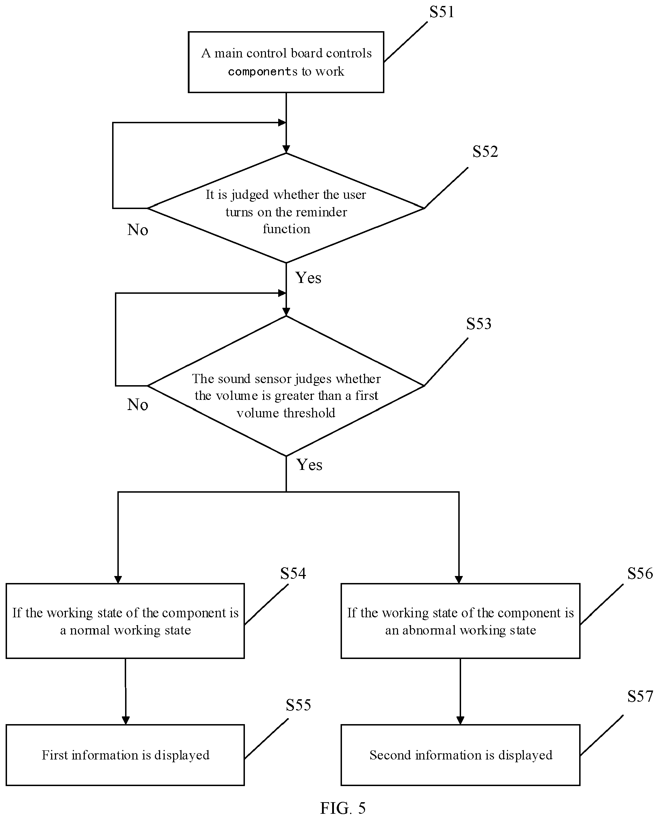

FIG. 5 is a flowchart of a smart appliance control method according to an example, and as shown in FIG. 5, the smart appliance control method is used in a smart appliance, and includes the following steps.

In step S51, a main control board of the smart appliance controls components to work. The main control board controls the components in the smart appliance to work and operate normally, and controls a sound sensor and a display panel, and transmits information to an APP through a WIFI module, and controls the APP to make corresponding prompts.

In step S52, the main control board judges whether the user turns on the reminder function. If the user turns on the reminder function, proceed to the next step S53; if the user does not turn on the reminder function, return to the previous step S51.

In step S53, the sound sensor judges whether the volume is greater than a first volume threshold. The sound sensor detects the volume of the sound according to the received sound signal and compares the volume with the first volume threshold, and if the volume is greater than the first volume threshold, the user is prompted accordingly according to different working states; if the volume is smaller than the first volume threshold, no prompt will be given.

In step S54, it is determined that the working state of the component is a normal working state.

In step S55, displaying first information. The first information includes identification information of the component and is used to represent that the component is in a normal working state. When the detected volume of the component is greater than the first volume threshold, and the component is in a normal working state, the first information is displayed to the user. The first information includes that the icon corresponding to the component displayed by the display panel is on and displayed in green, the main control board is connected to the APP through the WIFI module, and the APP displays that the component is in a normal working state.

In step S56, in the case that the working state of the component is an abnormal working state.

In step S57, displaying second information. The second information includes identification information of the component and is used to represent that the component is in an abnormal working state. When the detected volume of the component is greater than the first volume threshold, the component is in an abnormal working state, the second information is displayed to the user. The second information includes the icon corresponding to the component displayed by the display panel is on and displayed in red, the main control board is connected to the APP through the WIFI module, the APP displays that the component is in an abnormal working state, and the abnormal working information of the component is sent to the user, so that the user is informed about the working state of the component in time.

Examples of the disclosure will explain the smart appliance control method referred to above by taking a smart refrigerator as an example.

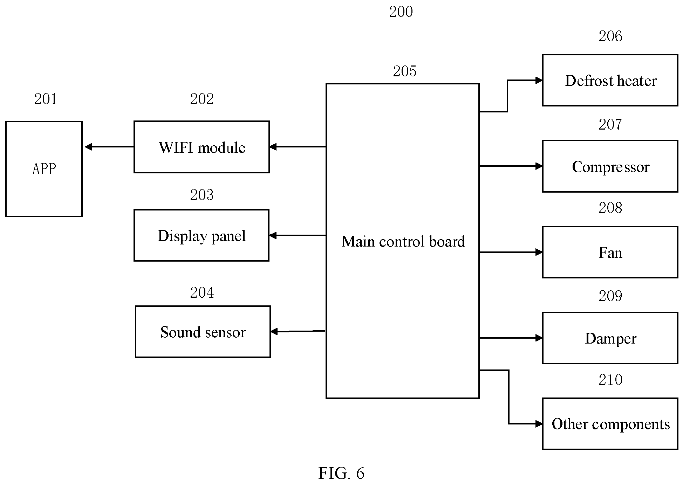

FIG. 6 is a structural schematic diagram of a smart refrigerator according to an example of the disclosure. Referring to FIG. 6, the smart refrigerator 200 includes an APP module 201, a WIFI module 202, a display panel 203, sound sensors 204, a main control board 205, a defrost heater 206, a compressor 207, fans 208, a damper 209, and other components 210.

The APP module 201 is configured to display working information of a component, and send corresponding prompt information to the user when receiving a corresponding signal.

The WIFI module 202 is configured to connect the main control board and the APP and transmit information between the main control board and the APP.

The display panel 203 is configured to display different working states of the component.

The display principle of the display panel 203 is to realize pattern display with a display screen and electronic elements, the electronic elements are elements constituting a circuit controlling the LCD screen, and the electronic elements include a display control chip, a driving chip, etc., and realizes a display effect by applying an electric field to control the direction of liquid crystal molecules.

The display panel 203 includes an icon corresponding to each component, the display state of each component can be clearly seen, and different working states correspond to different icon display modes, for example:
A: when the component does not work, the corresponding icon not lighting up, and is displayed in colorless.
B: when the component works normally, the corresponding icon lighting up, and is displayed in green.
C: when the component works abnormally, the corresponding icon lighting up, and is displayed in red.

It may be understood that the icon display manner and the displayed color are not limited in the examples of the disclosure, and the above is merely illustrative and not intended to be limiting.

The sound sensor 204 is configured to detect the volume of the sound emitted by the component.

The sound sensor 204 may convert sound wave signals into electrical signals, and internally elements include diaphragm, capacitor, amplifier etc. When sound waves propagate to the sensing area of the sound sensor, a vibrating element inside the sensor will vibrate, so that electrical signals can be generated, and the converted electrical signals can be output to a control system, so as to achieve the collection, processing, and transmission of sound. The magnitude of the collected electrical signal is related to the frequency and amplitude of the sound wave.

The plurality of sound sensors 204 are respectively placed in the vicinity of the corresponding components, so that the accuracy of the detection result can be ensured.

The main control board 205 is configured to control the normal working and operation of the components in the smart appliance, control the sound sensor and the display panel, and control the APP to make corresponding prompts by transmitting information to the APP through the WIFI module.

Defrost heater 206, a defrost timer is an element for controlling the defrost heater to work, and calculates the working cycle of the compressor. Generally, after the compressor works for 8 hours cumulatively, the defrosting command will be executed. In this case, the defrost timer powers the defrost heater to perform defrost, and providing automatic defrosting function for the refrigerator.

The compressor 207, which is the core component in the refrigerator, the compressor can suck the low-temperature and low-pressure refrigerant, compresses the low-temperature and low-pressure refrigerant into high-temperature and high-pressure gas, then dissipates heat of the high-temperature and high-pressure gas through the condenser to turn the high-temperature and high-pressure gas into high-pressure liquid, and finally depressurizes the high-pressure liquid through an expansion valve to turn the high-pressure liquid into low-temperature and low-pressure refrigerant, thus completing a refrigeration cycle, so as to realize the refrigeration function of the refrigerator.

The fans 208 are located below the refrigerator and within the refrigerator. The fan 208 located below the refrigerator is configured to cool the compressor and force air through the external coil. The fan 208 located inside the refrigerator is configured to cause air to flow around the internal coil.

The damper 209 is a temperature control system and a fan system controller for the compressor protection system (including overcurrent protection and pipeline high-and low-pressure protection), the refrigerator can control the air output of the cooling unit through the damper to achieve the purpose of controlling the temperature of the refrigerator room.

By applying the smart appliance control method provided by the example of the disclosure, when the components in the smart refrigerator work, the main control board controls the components to work, and the main control board transmits the working information to the display panel, and the display panel displays the components that are working. On the other hand, the main control board controls the components to work, and the main control board transmits the working information to the APP via the cloud to remind the user of the working states of the components.

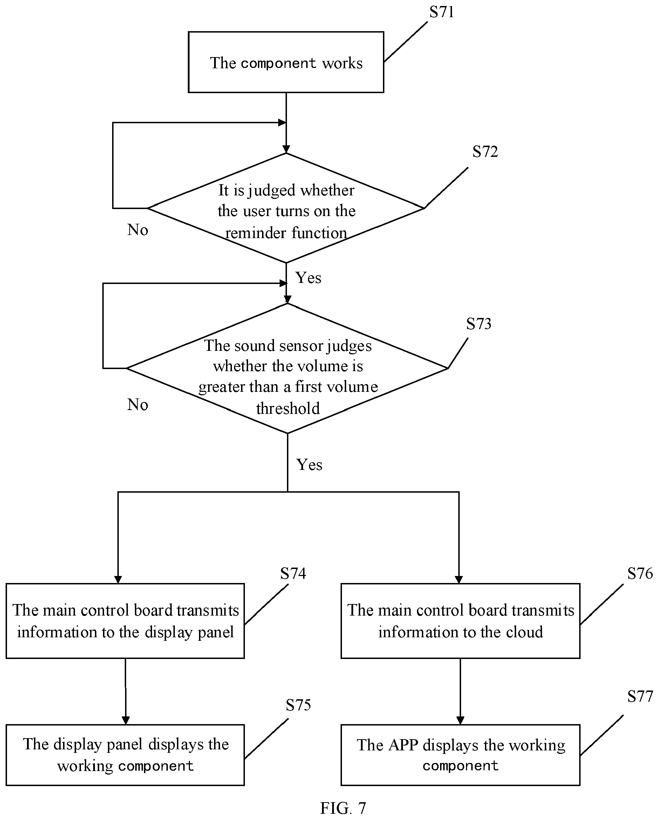

FIG. 7 is a flowchart of an intelligent refrigerator control method according to an example, and as shown in FIG. 7, the intelligent refrigerator control method includes the following steps.
In step S71, the component working.
In step S72, judging whether the user turns on the reminder function.
In step S73, the sound sensor detects whether the volume is greater than a preset value. If yes, step S74 is executed. If not, return to step S73.
In step S74, the main control board transmits the information to the display panel.
In step S75, the display panel displays the working component.
In step S76, the main control board transmits the information to the cloud.
In step S77, the APP displays the working component.

In an example of the disclosure, the target device associated with the smart appliance is a second device different from the smart appliance, and may be a smart phone, a tablet, a computer, a smart watch, including but not limited to the above devices.

Based on the same concept, an example of the disclosure further provides a smart appliance control apparatus.

It may be understood that the smart appliance control apparatus provided by the example of the disclosure includes a hardware structure and/or a software module corresponding to the execution of various functions in order to realize the above functions. The examples of the disclosure may be realized in hardware or a combination of hardware and computer software with the elements and algorithm steps of the examples disclosed in the examples of the disclosure. Whether a function is implemented as hardware or computer software driven hardware depends upon the specific application and design constraints of the solution. Those skilled in the art may use different methods for each specific application to implement the described functions, but such implementation does not be considered as going beyond the scope of the technical solutions of the examples of the disclosure.

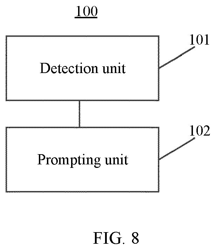

FIG. 8 is a block diagram of a smart appliance control apparatus 100 according to an example of the disclosure. Referring to FIG. 8, the smart appliance control apparatus 100 includes a detection unit 101 and a prompting unit 102.

The detection unit 101 is configured to acquire a signal output by at least one sound sensor in a smart appliance, and determine a component emitting a sound and the volume of the sound according to the signal output by the sound sensor.

The prompting unit 102 is configured to prompt (also referred to as determine, identify or recognize) the working state of the component based on the volume of the sound.

In one embodiment, the prompting unit 102 prompts the working state of the component based on the volume of the sound in the following way: prompting the working state of the component in response to determining that the volume of the sound is greater than a first volume threshold.

In one embodiment, the prompting unit 102 prompts the working state of the component in the following way: determining the working state of the component, and displaying first information if the working state of the component is a normal working state, where the first information includes identification information of the component and is used to represent that the component is in the normal working state.

In one embodiment, the prompting unit 102 prompts the working state of the component in the following way: determining the working state of the component, and displaying second information if the working state of the component is an abnormal working state, where the second information includes identification information of the component and is used to represent that the component is in the abnormal working state.

In one embodiment, the prompting unit 102 prompts the working state of the component in at least one of the following ways:
displaying information on a display screen of the smart appliance.
sending the information to a target device associated with the smart appliance.

The information displayed on the display screen or the information sent to the target device includes first information and/or second information. The first information includes identification information of the component and is used to represent that the component is in a normal working state; the second information includes identification information of the component and is used to represent that the component is in an abnormal working state.

Regarding the apparatus in the above-described examples, the specific manner in which the respective modules perform the operations has been described in detail in relation to the examples of the method, and will not be elaborated here.

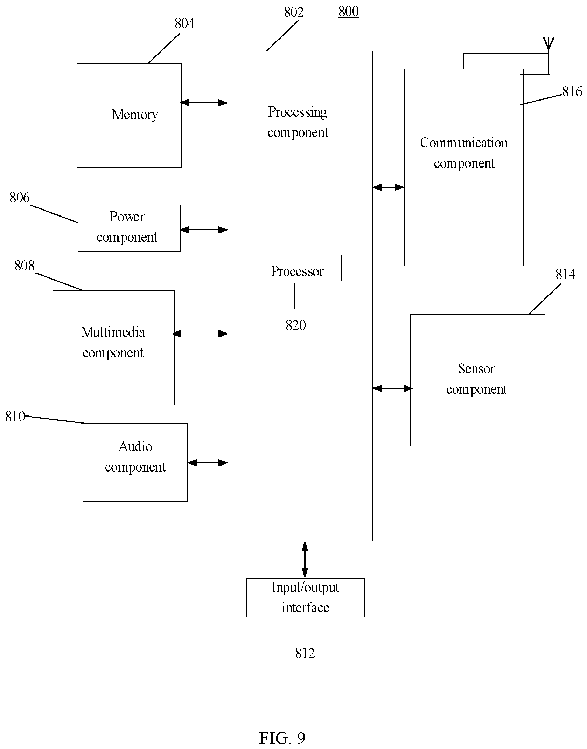

FIG. 9 is a block diagram of a smart appliance control apparatus 800 according to an example. For example, the apparatus 800 may be provided as a smart appliance, for example, may be a refrigerator, a mobile phone, a computer, a digital broadcast terminal, a messaging device, a game console, a tablet device, a medical device, a fitness device, a personal digital assistant or the like.

Referring to FIG. 9, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the apparatus 800, such as operations associated with display, phone call, data communication, camera operation, and recording operation. The processing component 802 may include one or more processors 820 to execute instructions to perform all or part of the steps of the methods described above. Additionally, the processing component 802 may include one or more modules that facilitate the interaction between the processing component 802 and other components. For example, the processing component 802 may include a multimedia module to facilitate the interaction between the multimedia component 808 and the processing component 802.

The memory 804 is configured to store various types of data to support the operation at the apparatus 800. Examples of these data include instructions for any application or method operating on the apparatus 800, contact data, phonebook data, messages, pictures, video, etc. The memory 804 may be implemented by any type or combination of volatile or non-volatile memory devices, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 806 provides power for the various components of the apparatus 800. The power component 806 may include a power management system, one or more power sources, and other components associated with generating, managing, and distributing power for the apparatus 800.

The multimedia component 808 includes a screen that provides an output interface between the apparatus 800 and the user. In some examples, the screen may include a liquid crystal display (LCD) and a touch panel (TP). If the screen includes a touch panel, the screen may be implemented as a touch screen to receive input signals from a user. The touch panel includes one or more touch sensors to sense touch, sliding and gestures on the touch panel. The touch sensor may sense the boundary of a touch or sliding action, and may also detect the duration and pressure associated with the touch or sliding operation. In some examples, the multimedia component 808 includes a front-facing camera and/or a rear-facing camera. When the apparatus 800 is in an operating mode, such as a shooting mode or a video mode, the front-facing camera and/or the rear-facing camera may receive external multimedia data. Each front-facing camera and rear-facing camera may be a fixed optical lens system or have focal length and optical zoom capability.

The audio component 810 is configured to output and/or input audio signals. For example, the audio component 810 includes a microphone (MIC) configured to receive external audio signals when the apparatus 800 is in an operating mode, such as a calling mode, a recording mode, and a voice recognition mode. The received audio signals may be further stored in the memory 804 or transmitted via the communication component 816. In some examples, the audio component 810 further includes a speaker for outputting audio signals.

The I/O interface 812 provides an interface between the processing component 802 and peripheral interface modules, and the peripheral interface modules may be keyboards, click wheels, buttons, and the like. These buttons may include, but are not limited to, a home button, a volume button, a start button, and a lock button.

The sensor component 814 includes one or more sensors for providing status assessments of various aspects for the apparatus 800. For example, the sensor component 814 may detect the on/off state of the apparatus 800, and the relative positioning of the components, such as the display and keypad of the apparatus 800, the sensor component 814 may also detect changes in the position of the apparatus 800 or a component of the apparatus 800, the presence or absence of user contact with the apparatus 800, changes in the orientation or acceleration/deceleration of the apparatus 800, and temperature of the apparatus 800. The sensor component 814 may include a proximity sensor configured to detect the presence of a nearby object in the absence of any physical contact. The sensor component 814 may also include an optical sensor, such as a CMOS or CCD image sensor, for use in imaging applications. In some examples, the sensor component 814 may also include an acceleration sensor, a gyro sensor, a magnetic sensor, a pressure sensor, or a temperature sensor.

The communication component 816 is configured to facilitate the wired or wireless communication, between the apparatus 800 and other devices. The apparatus 800 may access a wireless network based on a communication standard, such as WiFi, 2G, or 3G, or a combination of WiFi, 2G, or 3G. In an example, the communication component 816 receives a broadcast signal or broadcast related information from an external broadcast management system via a broadcast channel. In an example, the communication component 816 also includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In an example, the apparatus 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements, for performing the methods described above.

In an example, there is also provided a non-transitory computer-readable storage medium including instructions, e.g., the memory 804 including instructions, and the instructions may be executed by the processor 820 of the apparatus 800 to perform the method described above. For example, the non-transitory computer readable storage medium may be an ROM, a random access memory (RAM), a CD-ROM, a magnetic tape, a floppy disk, an optical data storage device, and the like.

It may be understood that in the disclosure "plurality of" means two or more, and other quantifiers are similar. "and/or", which describes the association relationship of the associated object, indicates that three relationships may exist, e.g., A and/or B may indicate that A exists alone, A and B exist together, and B exists alone. The character "/" generally indicates that a contextual object is an "OR" relationship. The singular forms "a," "an," and "the" are intended to include the plural forms as well, unless the context clearly indicates otherwise.

It may be further understood that the terms such as "first" and "second" are merely used to distinguish one and the same type of information from another, and do not denote a particular order or degree of importance. Indeed, the expressions "first", "second" and the like are fully used interchangeably. For example, first information may also be referred to as second information, and, similarly, second information may also be referred to as first information, without departing from the scope of the disclosure.

It may be further understood that, the terms "central", "longitudinal", "lateral", "front", "rear", "upper", "lower", "left", "right", "vertical", "horizontal", "top", "bottom", "inner", "outer" and the like indicate an orientation or positional relationship based on the orientation or positional relationship shown in the drawings, which is merely for ease of description of the present examples and for simplicity of description, and is not intended to indicate or imply that the referenced device or element needs to have a particular orientation, be constructed and operate in a particular orientation.

It may be further understood that unless specifically stated otherwise, "connection" includes direct connection where no other elements are present between the two, and also includes indirect connection where other elements are present between the two.

It may be further understood that while operations are depicted in the drawings in a particular order in examples of the disclosure, this does not need to be understood as requiring that such operations be performed in the particular order shown or in sequential order, or that all illustrated operations be performed, to achieve desirable results. In certain circumstances, multitasking and parallel processing may be advantageous.

## Claims

1. A smart appliance control method, comprising:
Acquiring (S11) a signal output by at least one sound sensor in a smart appliance;
Determining (S12) a component emitting a sound and a volume of the sound according to the signal output by the sound sensor; and
Prompting (S13) a working state of the component based on the volume of the sound.

2. The method according to claim 1, wherein prompting (S13) the working state of the component based on the volume of the sound comprises:
Prompting (S22) the working state of the component in response to determining (S21) that the volume of the sound is greater than a first volume threshold.

3. The method according to claim 2, wherein prompting (S13) the working state of the component comprises:
determining (S31) the working state of the component; and
displaying (S33) first information in response to determining (S32) that the working state of the component is a normal working state, wherein the first information comprises identification information of the component and is used to represent that the component is in a normal working state.

4. The method according to claim 2, wherein prompting (S13) the working state of the component comprises:
determining (S41) the working state of the component; and
displaying (S43) second information in response to determining (S42) that the working state of the component is an abnormal working state, wherein the second information comprises identification information of the component and is used to represent that the component is in an abnormal working state.

5. The method according to claims 1 or 2, wherein prompting (S 13) the working state of the component comprises:
displaying information on a display screen of the smart appliance; wherein
the information comprises first information and/or second information;
the first information comprises identification information of the component and is used to represent that the component is in a normal working state;
the second information comprises identification information of the component and is used to represent that the component is in an abnormal working state.

6. The method according to claims 1 or 2, wherein prompting (S 13) the working state of the component comprises:
sending information to a target device associated with the smart appliance; wherein
the information comprises first information and/or second information;
the first information comprises identification information of the component and is used to represent that the component is in a normal working state;
the second information comprises identification information of the component and is used to represent that the component is in an abnormal working state.

7. The method according to claims 1 or 2, wherein prompting (S 13) the working state of the component comprises:
displaying information on a display screen of the smart appliance; and
sending the information to a target device associated with the smart appliance; wherein
the information comprises first information and/or second information;
the first information comprises identification information of the component and is used to represent that the component is in a normal working state;
the second information comprises identification information of the component and is used to represent that the component is in an abnormal working state.

8. A smart appliance control apparatus (800), comprising:
a processor (820); and
a memory (804), configured to store instructions executable by a processor; wherein
the processor (820) is configured to acquire a signal output by at least one sound sensor in a smart appliance; determine a component emitting a sound and a volume of the sound according to the signal output by the sound sensor; and prompt a working state of the component based on the volume of the sound.

9. The smart appliance control apparatus (800) according to claim 8, wherein the processor (820) prompts the working state of the component based on the volume of the sound in the following way:
prompting the working state of the component in response to determining that the volume of the sound is greater than a first volume threshold.

10. The smart appliance control apparatus (800) according to claim 9, wherein the processor (820) prompts the working state of the component in the following way:
determining the working state of the component; and
displaying first information in response to determining that the working state of the component is a normal working state, wherein the first information comprises identification information of the component and is used to represent that the component is in a normal working state.

11. The smart appliance control apparatus (800) according to claim 9, wherein the processor (820) prompts the working state of the component in the following way:
determining the working state of the component; and
displaying second information in response to determining that the working state of the component is an abnormal working state, wherein the second information comprises identification information of the component and is used to represent that the component is in an abnormal working state.

12. The smart appliance control apparatus (800) according to claims 8 or 9, wherein the processor (820) prompts the working state of the component in the following way:
displaying information on a display screen of the smart appliance; wherein
the information comprises first information and/or second information;
the first information comprises identification information of the component and is used to represent that the component is in a normal working state;
the second information comprises identification information of the component and is used to represent that the component is in an abnormal working state.

13. The smart appliance control apparatus (800) according to claims 8 or 9, wherein the processor (820) prompts the working state of the component in the following way:
sending information to a target device associated with the smart appliance; wherein
the information comprises first information and/or second information;
the first information comprises identification information of the component and is used to represent that the component is in a normal working state;
the second information comprises identification information of the component and is used to represent that the component is in an abnormal working state.

14. The smart appliance control apparatus (800) according to claims 8 or 9, wherein the processor (820) prompts the working state of the component in the following ways:
displaying information on a display screen of the smart appliance; and
sending the information to a target device associated with the smart appliance; wherein
the information comprises first information and/or second information;
the first information comprises identification information of the component and is used to represent that the component is in a normal working state;
the second information comprises identification information of the component and is used to represent that the component is in an abnormal working state.

15. A non-transitory computer-readable storage medium, wherein the storage medium stores instructions, and when the instructions in the storage medium are executed by a processor of a smart appliance, the smart appliance is enabled to perform the smart appliance control method according to any one of claims 1 to 7.
